**Europäisches Patentamt**

**European Patent Office**

**Office européen des brevets**

(11) Publication number : **0 517 449 A2**

## (12) EUROPEAN PATENT APPLICATION

(21) Application number : **92304943.1**

(22) Date of filing : **29.05.92**

(51) Int. Cl.⁵ : **C04B 35/56**

(30) Priority : **03.06.91 US 709051**

(43) Date of publication of application :
**09.12.92 Bulletin 92/50**

(84) Designated Contracting States :
**DE FR GB IT**

(71) Applicant : **GENERAL ELECTRIC COMPANY**
**1 River Road**
**Schenectady, NY 12345 (US)**

(72) Inventor : **Hillig, William Bruno**
**1010 Saratoga Road**
**Ballston Lake, New York 12019 (US)**
Inventor : **Singh, Raj Narain**
**31 Shelburne Court**
**Schenectady, New York 12309 (US)**

(74) Representative : **Pratt, Richard Wilson et al**
**London Patent Operation G.E. Technical**
**Services Co. Inc. Essex House 12/13 Essex**
**Street**
**London WC2R 3AA (GB)**

(54) Infiltration forming composites of silicon carbide and molybdenum silicide free of silicon.

(57)   A silicon carbide composite, formed from a preform that is heated and infiltrated with molten silicon, is formed by a method comprising : forming a composite preform comprised of a carbon fiber component, a carbon particle component, a porosity component, and a reactive powder component, each component being present in an amount that provides for complete infiltration of the preform and reaction with the molten silicon so there is essentially no detectable free silicon remaining in the composite after infiltration.

EP 0 517 449 A2

## BACKGROUND OF THE INVENTION

This application relates to a method for infiltrating molten silicon into a porous body of a carbonaceous material to produce a silicon free composite of silicon carbide.

The infiltration of materials with silicon has been carried out by using some form of a carbon fiber wick to transport molten silicon from a reservoir to the material being infiltrated. U.S. Patent Nos. 4,120,731, 4,141,948, 4,148,894, 4,220,455, 4,238,433, 4,240,835, 4,242,106, 4,247,304, 4,353,953, 4,737,328, and 4,793,859, incorporated herein by reference, disclose such silicon infiltration of materials which include carbon, carbon-coated diamond or cubic boron nitride, and blends of carbon with silicon carbide, boron nitride, silicon nitride, aluminum oxide, magnesium oxide and zirconium oxide. U.S. Patent No. 4,889,686, incorporated herein by reference, discloses infiltration formed silicon carbide composites having a fiber reinforcement of silicon carbide or carbon fibers.

Molten silicon infiltration forming of silicon carbide composites involves the independent processes of infiltration and reaction between a molten silicon infiltrant and a porous carbonaceous preform to form silicon carbide. The reaction between molten silicon and carbon in the preform closes infiltration pore channels in the preform in direct competition with the continued infiltration of the preform, and is known as reaction-choking. Sufficient porosity is required in the preform to provide for a continuous infiltration path even after all carbon is consumed by the reaction, and excess porosity in the preform is filled with residual silicon. As a result, there is a substantial volume fraction, about 5 to 30 percent or more, of free silicon in infiltration formed silicon carbide composites that is present to facilitate infiltration processing.

The processing temperatures for infiltration forming silicon carbide composites are much lower than for consolidating silicon carbide by hot-pressing or sintering. Infiltration forming can be done near the melting point of silicon, about 1410°C, whereas hot-pressing and sintering of silicon carbide require temperatures in excess of 1800°C and 2000°C, respectively. Infiltration forming time ranges from about several minutes to an hour, since infiltration and reaction are aided by the favorable wetting of carbon by liquid silicon, the low viscosity of silicon melts, and exothermic self heating that occurs during infiltration and reaction. In addition, infiltration forming can be performed to minimize shape and dimensional changes in the original preform.

Infiltration formed silicon carbide composites are limited in high-temperature properties by the presence of the residual free silicon. The low-temperature mechanical properties of infiltration formed silicon carbide composites can be quite good, being largely a function of microstructure. Commercially available materials exhibit room temperature flexural strengths of 200 to 600 MPa., whereas laboratory materials, prepared using microporous carbon preforms derived from organic precursors to obtain finer-grain microstructures, have resulted in the highest reported strengths of about 700 MPa.

High-temperature strength and creep resistance of infiltration formed silicon carbide composites drop rapidly upon melting of the free silicon phase at about 1410°C. Thus, while the processing temperatures are low relative to those for hot pressing or sintering, the ultimate use temperatures are not as high. At elevated temperatures below the silicon melting point, about 1200°C to 1400°C, ductility in the silicon phase appears to improve fracture toughness and strength, but also leads to premature creep rupture. At low temperatures the free silicon phase may be detrimental to properties as well. Silicon expands upon freezing, and failure flaws have been observed to initiate and propagate along the interface between silicon and silicon carbide.

Infiltration formed silicon carbide composites formed by infiltrating with a melt comprised of silicon and molybdenum are disclosed in "Liquid-Phase Reaction-Bonding of Silicon Carbide Using Alloyed Silicon-Molybdenum Melts", Robert P. Messner and Yet-Ming Chiang, Journal American Ceramics Society, Vol. 73, (5) pp. 1193-1200, 1990. Preforms comprised of either particulate graphite, or a mixture of particulate graphite and alpha-silicon carbide were infiltrated with silicon melts comprised of 4 to 8 mole percent molybdenum. Infiltration was carried out in a graphite resistance-heated furnace, under argon or helium atmosphere of several psi. overpressure, using pyrolitic boron nitride crucibles. The preforms were heated to within about 10°C of the melt temperature before being rapidly immersed in the melt. After immersion, the samples were held within the melt at temperature for 0.5 hour to complete the reaction and anneal stresses before cooling to room temperature. The best results were obtained with an eight mole percent concentration of molybdenum in the silicon melt infiltrant, and infiltration temperatures greater than about 1600°C. Messner et al. disclose a limited infiltration depth into the preform before reaction-choking occurrs.

It is an object of this invention to provide a method of forming silicon free infiltration formed silicon carbide composites.

It is another object of this invention to provide a method, using a silicon infiltrant, to form silicon free infiltration formed silicon carbide composites.

It is another object of this invention to provide a method of forming silicon free infiltration formed silicon carbide composites that is not limited in the infiltration depth of the preform.

## Brief Description of the Invention

Silicon carbide composites formed from preforms that are heated and infiltrated with molten silicon are formed by a method comprising: forming a composite preform comprised of a carbon fiber component, a carbon particle component, a porosity component, and a reactive powder component, each component being present in an amount that provides for complete infiltration of the preform and reaction with the molten silicon so there is essentially no detectable free silicon remaining in the composite after infiltration.

As used herein, the term "essentially no detectable free silicon" means there is insufficient free silicon to substantially reduce desirable mechanical properties in the composite, such as, toughness, creep strength, stress rupture strength, or ultimate tensile strength, when the composite is heated to about the melting point of silicon.

As used herein, the term "reactive powder component" means a metal powder from the group consisting of molybdenum powder, tungsten powder, molybdenum carbide powder that reacts with molten silicon, tungsten carbide powder that reacts with molten silicon, molybdenum silicide powder that reacts with molten silicon, tungsten silicide powder that reacts with molten silicon, and mixtures thereof Optionally, the preform is further comprised of a filler component of fibers or powders of materials that are substantially inert to the molten silicon infiltrant.

Preferably, the carbon fiber component has an aspect ratio of about 5 to 50 and a fiber diameter of about 0.5 to 25 microns, the carbon particle component has a particle size of about 0.5 to 25 microns, and the reactive powder component has a particle size of about 1 to 15 microns.

## Detailed Description of the Invention

We have discovered that the competing and independent processes of infiltration and reaction in infiltration forming silicon carbide composites can be balanced to provide for complete infiltration and reaction of a preform so that all the porosity in the preform is filled, and substantially all the molten silicon infiltrant is consumed and reacted to form high melting temperature compounds such as silicon carbide or molybdenum disilicide. As a result, a silicon carbide composite formed by the method of this invention can be used at temperatures above the melting point of silicon, about 1410°C, since there is essentially no free silicon that can melt and reduce oxidation resistance, creep resistance, or high temperature strength of the composite.

Low density amorphous carbon fiber or carbon particle components having a density of about 1.2 grams per milliliter, increase in volume by about 25 percent when reacted with molten silicon to form silicon carbide. Graphitic carbon, having a higher density of about 2.2 grams per milliliter, increases in volume about 128 percent when reacted with molten silicon to form silicon carbide. Reaction of molten silicon with molybdenum or molybdenum carbide produces volumetric increases of about 159 percent and 176 percent, respectively, in converting to the solids molybdenum disilicide, or molybdenum disilicide plus silicon carbide. When the volume of silicon consumed in such reactions is included, then there is a net volumetric decrease of about 25 percent. Swelling and cracking of the composite during infiltration and reaction will be greatly affected by the reaction rate between molten silicon and the reactive powder components, carbon fiber components, and carbon particle components. The porosity component of the preform must accommodate such volumetric changes that occur during infiltration to prevent cracking or choking-off of the infiltrant.

The composite preform formed in the method of this invention has a porosity component that is determined by the packing density of the other preform components, i.e., the carbon fiber component, carbon particle component, reactive powder component, and optional filler component. In addition, silicon powder can be used as a porosity component in forming the preform since any silicon in the preform will become molten at the infiltration temperature and become part of the infiltrant. Preferably, porosity is between about 30 to 50 volume percent of the preform. In preforms having less than about 30 volume percent porosity, premature reaction-choking occurs and prevents complete infiltration of the preform. A preform having greater than about 50 percent porosity may not have complete infiltration of the pores, resulting in incomplete filling of porosity and poor retention of the molten silicon.

Porosity in the preform is an open porosity. By open porosity in the preform, it is meant herein pores, voids or channels which are open to the surface of the preform thereby making the interior surfaces accessible to the molten silicon infiltrant. Preferably, the preform has no closed porosity. By closed porosity it is meant herein closed pores or voids, i.e. pores not open to the surface of the preform and therefore not in contact with the ambient atmosphere. Void or pore content, i.e. both open and closed porosity, can be determined by standard physical and metallographic techniques.

Preferably, the pores in the preform are small having an effective diameter ranging from about 0.1 micron to about 50 microns, and are distributed uniformly through the preform thereby enabling the production of a composite wherein the matrix phase is uniformly distributed through the composite.

The carbon fiber component promotes infiltration by wicking molten silicon into the preform and is a source of carbon for reacting with the infiltrant to form silicon carbide. Long fiber lengths are desirable to achieve good wicking, while short fiber lengths result in better packing and less porosity to fill in the preform. The fiber component also provides strength to the preform. Fibers can be described by the aspect ratio of the fiber, fiber length to diameter. Preferably, the fiber component has an average aspect ratio that promotes wicking, and packs with the other components to provide the desired porosity in the preform. Preferably, the fiber has an average diameter that allows complete reaction with the molten silicon. For example, a suitable fiber component has an aspect ratio of about 5 to 50, and a fiber diameter of about 0.5 to 25 microns. Most preferably, the aspect ratio is about 5 to 15 and the fiber diameter is about 3 to 10 microns. The carbon fiber can be graphitic, or preferably, amorphous. The carbon fiber has a density of about 1.2 to 2.2 grams per milliliter, preferably, about 1.2 to 1.6 grams per milliliter. Low density furnace insulation the WDF carbon felt, available from Union Carbide, can be abraded against a wire mesh screen, for example about 40 mesh, to form suitable fibers. Low density carbon fiber can be formed by carbonizing naturally occurring cellulose fibers, including cotton, chitosan, and bamboo, and crushing or chopping the fibers to the desired size.

The carbon particle component serves as a source of carbon to react with the infiltrant and form silicon carbide, and as a binder to maintain the shape and integrity of the preform. However, an excessive volume fraction of carbon particles can cause swelling and cracking of the infiltrated composite. The carbon particle component can be in the form of graphite or amorphous carbon, preferably, the carbon particles have a particle size of about 1 to 15 microns, and most preferably, have a particle size of about 1 to 5 microns. The carbon particle component can have a density of about 1.2 to 2.2 grams per milliliter. Preferably, the carbon particle component is a low density amorphous carbon having a density of about 1.2 to 1.6 grams per milliliter. A suitable carbon particle component is a Dylon aqueous graphite powder suspension, Dylon Industries, Inc., Ohio. Other sources for the carbon particle component are Johnson Matthey, Ma., and Great Lakes Carbon, N.Y.

The reactive powder component reacts with excess free silicon to form high melting temperature compounds such as molybdenum disilicide. In addition, the molybdenum or tungsten silicides that form in the preform during infiltration provide a diffusion path for transportation of free silicon to react with carbon, molybdenum, or tungsten. The reactive powder component is a metal powder from the group consisting of molybdenum powder, tungsten powder, molybdenum carbide powder that reacts with molten silicon, tungsten carbide powder that reacts with molten silicon, molybdenum silicide powder that reacts with molten silicon, tungsten silicide powder that reacts with molten silicon, and mixtures thereof. Molybdenum and tungsten carbides and silicides that react with molten silicon are the lower carbides and silicides, such as, $Mo_2C$, $MoC$, $W_2C$, and $WC$, or $Mo_3Si$, $Mo_3Si_2$, $Mo_5Si_3$, and $W_3Si_2$. Molybdenum powders, carbides, and silicides are preferred to the tungsten powders, carbides, and silicides because of the lower density of the molybdenum materials. Preferably, the reactive powder component has a particle size of about 1 to 15 microns, and most preferably, has a particle size of about 1 to 8 microns.

Optionally, a filler component can be added to the preform. The filler component is comprised of materials that do not react or have minimal reaction with the molten silicon infiltratant. The filler component can be selected to provide additional control of the swelling, the rate of the exothermic reactions occuring during infiltration, or to reduce density in the composite. Suitable fillers are a ceramic carbide from the group consisting of boron carbide, and silicon carbide; a ceramic nitride from the group consisting of aluminum nitride, niobium nitride, and silicon nitride; ceramic oxides from the group consisting of alumina, yttria, silica, and mullite; or a ceramic silicide, preferably disilicides, from the group consisting of chromium silicide, molybdenum silicide, tantalum silicide, titanium silicide, tungsten silicide, and zirconium silicide. The filler component can be a powder or fiber, preferably comparable in size to the other preform components described above. However, the filler component can be continuous fiber lengths, e.g., continuous lengths of reinforcement fibers such as high strength silicon carbide or carbon fibers.

We have discovered that the composite preform can be formed from the above components, with each component in an amount that provides for complete infiltration of the preform and reaction with the molten silicon infiltrant so there is substantially no detectable free silicon remaining in the composite after infiltration. In addition, the preform swelling and reaction rates between molten silicon and the carbon fiber, carbon particle, and reactive powder components are controlled by the preform components so that cracking and porosity are minimized in the infiltrated composite.

The volume fraction of each component in the composite preform required to provide a silicon free composite with minimal porosity and cracking can be determined as follows. A unit volume of the preform is comprised of a fractional volume of the carbon fiber component, $V_f$, a fractional volume of the carbon particle component, $V_p$, a fractional volume of the reactive powder component, $V_m$, a fractional volume percent of the filler component $V_a$, and the remainder is the volume of porosity, P. This can be expressed by equation 1 below:

$$1.)\ V_f + V_p + V_m + V_a + P = 1.$$

Upon infiltrating the preform with molten silicon, the carbon fiber component, the carbon particle component, and the reactive powder component, react with the molten silicon to form solid reaction products that occupy larger volumes than did the original components. After infiltration the porosity is substantially filled with such reaction products, and some fractional swelling, S, of the original unit volume of the preform may occur. The volume of the filler component that may be used in the preform remains substantially unchanged.

Those skilled in the art will recognize that the molar volume of a substance, expressed in milliliters, is given by the molecular weight of the substance divided by the density of the substance, expressed in grams per milliliter. In particular, the ratio of the volume of the product formed by chemical conversion of a component, to the original volume of the component is given by the molar volume[s] of the resultant products divided by the molar volume of the original component. For example, the ratio of the volume of the silicon carbide that results from the chemical conversion of carbon fiber, herein designated as $f_0$, is equal to 1.04 times the density of the carbon fiber. The ratio of the volume of the silicon carbide that results from the chemical conversion of carbon particles to the original volume of the carbon particles is designated $p_0$, and is equal to 1.04 times the density of the carbon particles. The ratio of the volume of the silicon carbide plus the volume of the molybdenum disilicide ($M_0Si_2$) that results from the conversion of the reactive powder to the original volume of the reactive powder is designated $m_0$. The value of $m_0$ is 3.575 when the reactive powder component is molybdenum, or 3.76 when the reactive powder component is $Mo_2C$. The value of $m_0$ for other reactive powder components can be readily calculated by those skilled in the art by taking the molar volumes of the products that result from the chemical conversion and dividing by the molar volume of the reactive powder component.

After infiltration and reaction to form the silicon carbide composite, the volumetric composition of the reacted composite is given by equation 2 below:

$$2.)\ f_0 V_f + p_0 V_p + m_0 V_m + V_a = 1 + S.$$

The ratios of preform components that result in complete conversion of the carbon particle component, carbon fiber component, and reactive powder component of the preform with accompanying filling of porosity is governed by equations 1 and 2. The swelling, S, and porosity, P, can be determined empirically by well known means in the art. For example, mixtures of various sizes of powders and fibers in various ratios are prepared, and the porosity of the mixtures is measured Porosity can be determined by means well known in the art, for example, see ASTM C 830 "Standard Test Methods for Apparent Porosity, Liquid Absorption, Apparent Specific Gravity, and Bulk Density of Refractory Shapes by Vacuum Pressure," 1991 Annual Book of ASTM Standards, Vol. 15.01, 1991. Such mixtures determine the range of porosities that can be achieved by mixing the various sizes of powders and fibers. Additional information on determining the porosity that can be achieved in mixtures of powders and fibers is given in, "Efficient Use of Whiskers in the Reinforcement of Ceramics," J.V. Milewski, Advanced Ceramic Materials, Vol. 1, No. 1, 1986, pp. 36-41, incorporated herein by reference.

The volume fraction of each preform component that can be mixed to give the range of porosities that can be achieved in mixing the given component sizes is determined by algebraic solution of equations 1 and 2. The volume fraction of two of the preform constituents can be preselected, and the volume fraction of the remaining two constituents is determined by the algebraic solution of equations 1 and 2. Alternatively, the particle size of each component is selected empirically by conventional techniques well known in the art to provide the desired porosity for the given volume fractions of each component of the composite preform.

Some example solutions are shown below in Table 1 for a carbon particle density of 2.2, a carbon fiber density of 1.2, zero percent swelling, molybdenum carbide as the reactive powder component, and silicon carbide filler component.

## Table 1

### Volume Fraction of Preform Components

| Porosity (percent) | Carbon Particles (percent) | Mo Carbide Particles (percent) | Carbon Fiber (percent) | Silicon Carbide (percent) |
|---|---|---|---|---|
| 30 | 14.1 | 10.9 | 30 | 15 |
| 32 | 18.2 | 9.8 | 25 | 15 |
| 34 | 20.1 | 5.9 | 30 | 10 |
| 36 | 24.2 | 4.8 | 25 | 10 |
| 38 | 26 | 1 | 30 | 5 |
| 40 | 14.1 | 10.9 | 30 | 5 |
| 42 | 18.2 | 9.8 | 25 | 5 |

The preform can be formed from the desired volume percent of each component by known and conventional ceramic powder forming techniques that provide a homogenous distribution of each component in the preform. For example, the components can be formed into the composite preform by mixing the components in an organic polymer binder to form tape-cast thin sheets, and stacking the sheets to form the preform. Suitable organic polymer binders decompose upon heating at temperatures below the infiltration temperature, preferably below about 500°C, without leaving residue that degrades the infiltration or mechanical properties of the composite formed therefrom.

The preform can be formed or shaped by a number of known techniques. For example, it can be extruded, injection molded, die-pressed, isostatically pressed or slip cast to produce the preform of desired size and shape. Preferably, the preform is of the size and shape desired of the composite. Generally, there is no significant difference in dimension between the preform and the resulting composite. Any lubricants, binders, or similar materials used in shaping the mixture are of the type which decompose on heating at temperatures below the infiltration temperature, preferably below 500°C, without leaving a residue that degrades the infiltration or properties of the resulting composite.

In another method, the volume fraction of carbon fibers, carbon particles, reactive powder, and optional filler components are mixed by mechanical vibration and ball milling in an aqueous solution with about 2 to 6 weight percent of a nonionic poly(ethylene oxide) homopolymer ranging in molecular weight from about one-hundred thousand to five million. A suitable polymer is Polyox WSR-205 or WSR Coagulant, Union Carbide. The ethylene oxide polymer thickens the mixture and maintains the homogeneity in the mixture of components so the higher density reactive powder component does not separate out. The suspension of components is poured into a mold to form a shaped preform, or spread with a straight edge to form a sheet or tape preform. The liquid is allowed to evaporate in air, and the polymer is decomposed by heating to 300°C in air. Additional strength is provided to the preform by infiltrating into the preform a dilute solution of a carbonizable phenolic resin, for example, 931 graphite adhesive binder, Cotronics, N.Y. The preform is dried in air, heated to 100°C to crosslink the resin, and heated to 300°C in air to decompose the resin. A preform with a homogenous distribution of all components is formed.

The preform is contacted with silicon-associated infiltrating means whereby silicon is infiltrated into the preform. The infiltrating means allow silicon to be infiltrated into the preform. For example, a structure or assembly is formed comprised of the preform in contact with means that are in contact with silicon and which permit infiltration of molten silicon into the preform. In one infiltration technique, the preform is placed on a woven cloth of elemental carbon, a piece of silicon is also placed on the cloth, and the resulting structure is heated to infiltration temperature. At infiltration temperature, the molten silicon migrates along the cloth and wicks into the preform. After infiltration, the wicking carbon cloth may be removed from the composite by diamond grinding.

In another technique, the silicon infiltration procedure can be carried out as set forth in U.S. Patent 4,626,516, incorporated herein by reference, which discloses an assembly that includes a mold with infiltration holes and a reservoir holding elemental silicon. The preform is placed within the mold and carbon wicks are provided in the infiltrating holes. The wicks are in contact with the preform and also with the silicon and at infiltration temperature the molten silicon migrates along the wicks into the preform.

U.S. Patent 4,737,328 incorporated herein by reference, discloses another infiltration technique which comprises contacting the preform with a powder mixture composed of silicon and hexagonal boron nitride, heating the resulting structure to a temperature at which the silicon is fluid and infiltrating the fluid silicon into the preform. After infiltration, the resulting porous hexagonal boron nitride powder is brushed off the composite.

Preforms having a simple square or rectangular shape can be infiltrated by placing silicon directly on the preform, and heating to a temperature at which the silicon is fluid. The molten silicon wicks into and infiltrates the preform.

The preform and infiltration structure or assembly are heated to the infiltration temperature in a nonoxidizing atmosphere or partial vacuum. Suitable inert atmospheres include argon, or reducing atmospheres such as hydrogen or carbon monoxide. Atmospheres that react with molten silicon, such as oxygen or nitrogen, are avoided. The remaining atmosphere of the partial vacuum should be inert, such as argon, or reducing such as carbon monoxide. Preferably, the nonoxidizing partial vacuum is provided before heating is initiated. The partial vacuum is at least sufficient to avoid the entrapment of pockets of gas, and minimizes porosity in the infiltration formed composite. Generally, such a partial vacuum ranges from about 0.01 torr to about 2 torr, and usually from about 0.01 torr to about 1 torr to remove gas evolving in the preform being infiltrated.

Preferably, the furnace used is a carbon furnace, i.e. a furnace fabricated from elemental carbon. Such a furnace acts as an oxygen getter for the atmosphere within the furnace reacting with oxygen to produce CO or $CO_2$ and thereby provides a nonoxidizing atmosphere, i.e. reaction between the residual gas, preform, and infiltrant is minimized. Infiltration cannot be carried out in air because the liquid silicon would oxidize to form a dense silica coating before any significant infusion by silicon occurred. In such instance where a carbon furnace is not used, it is preferable to have an oxygen getter present in the furnace chamber, such as elemental carbon, in order to provide a nonoxidizing atmosphere. Alternatively, other nonoxidizing atmospheres inert to the infiltration process can be used at partial vacuums of about $10^{-2}$ torr to 2 torr.

Infiltration is performed at a temperature where silicon is molten, but below the temperature where the silicon infiltrant begins to vaporize. Molten silicon has a low viscosity. The melting point of the silicon can vary depending largely on the particular impurities which may be present, so that the infiltration temperature ranges from about 1400°C to about 1550°C, and preferably from about 1425°C to about 1450°C. The rate of penetration of the silicon into the preform depends on the wetting of the preform by the silicon melt, and the fluidity of the melt. As the infiltration temperature increases, the ability of the molten silicon to wet the preform improves.

Sufficient silicon is infiltrated into the preform to produce the composite. Specifically, the molten silicon is mobile and highly reactive with elemental carbon, i.e. it has an affinity for elemental carbon, wetting it and reacting with it to form silicon carbide. The molten silicon also has an affinity for any metal with which it reacts to form the silicide thereof. In addition, sufficient silicon is infiltrated into the preform to fill pores or voids which may remain in the composite.

The period of time required for infiltration by the silicon is determinable empirically and depends largely on the size of the preform and extent of infiltration required. Generally, it is completed in less than about 20 minutes, and often in less than about 10 minutes.

The resulting infiltrated body is cooled in an atmosphere and at a rate which minimizes oxidation, cracking, or other defect formation within the body. Preferably it is furnace cooled in the nonoxidizing partial vacuum to about room temperature, and the resulting composite is recovered.

One particular advantage of this invention is that the composite can be produced directly in a wide range of sizes and shapes which heretofore may not have been able to be manufactured or which may have required expensive and tedious machining. For example, the composite can be as short as about an inch or less, or as long as desired. It can be of simple, complex, or hollow geometry. For example, it can be produced in the form of a tube or a hollow cylinder, a ring, a sphere, or a bar having a sharp point at one end. Since the composite can be produced in a predetermined configuration of predetermined dimensions, it requires little or no machining.

The composite has a wide range of applications depending largely on its particular composition. It can be used, for example, as a wear resistant part, bearing or tool insert, acoustical part, or high-temperature structural component.

Additional features and advantages of the method of this invention are shown in the following examples where, unless otherwise stated, the following materials and equipment were used. The carbon fiber was WDF carbon felt about 1.2 g/ml in density obtained from Union Carbide, and abraded against a wire mesh screen to form fibers having an average aspect ratio of about 20:1 and and average fiber diameter of about 7 microns. The carbon powder was a dried DYLON graphite particulate about 2.2 g/ml in density obtained from Dylon Industries, Ohio, with an average particle size of about 10 microns. The molybdenum carbide powder had an average particle size of about 5.5 microns. The silicon carbide powder had an average particle size of about 2 microns. The carbon resistance furnace used to form the composite was contained in a vacuum belljar system.

Example 1

A mixture of about 25 volume percent of carbon fibers, about 19.5 volume percent carbon powder, about 7 volume percent of molybdenum carbide powder, and about 12.5 volume percent of silicon carbide powder was prepared. The mixture was added to a 0.5 liter aqueous solution comprised of about 5 weight percent WSR-205 Polyox ethylene oxide polymer, Union Carbide, and mixed in a paint shaker for about 5 minutes, forming a slurry. The slurry was ball milled in a plastic jar with zirconium oxide balls to homogeneously distribute all the powders and fibers. Teflon shims of about 0.375 millimeter thickness were placed about 15 centimeters apart on a Teflon covered glass plate. The slurry was poured onto the plate between the shims and smoothed with a straight edge angled at about 30°. The spread slurry was allowed to dry in air, cut into one inch square sections, and six square sections were aligned in a stack to form a preform weighing about 0.8 grams.

The preform stack of tapes was heated to about 200°C in 1 hour to decompose the polymer, and infiltrated with a phenolic resin, 931 graphite adhesive binder, Cotronics, New York. The infiltrated preform was placed between two plates covered with a porous Teflon tape, Dupont T27730A, and pressed at 75°C under 12 pounds force until the resin dried. The pressed preform was heated to about 100°C to dry and cross link the resin, and heated to about 200° for 1 hour to decompose the resin. The porosity of the preform was measured by weighing the preform, immersing the preform in acetone, and reweighing. The porosity in the preform was then calculated form the measured increase in density. The preform had a porosity of about 36 plus or minus 2 volume percent.

About 1 gram of silicon powder was placed on the preform positioned in the carbon furnace. The preform and silicon powder were heated to about 1430°C for 20 minutes to infiltrate the preform and form a silicon carbide composite. Metallographic examination of the resulting composite showed no detectable porosity remaining in the preform. A polished cross-section of the composite was heated to about 100°C above the melting point of silicon, and examined metallographically. There was no evidence of melted silicon, showing no detectable free silicon remained in the composite.

Example 2

A mixture of about 22.6 volume percent of carbon fibers, about 26 volume percent carbon powder, about 4.2 volume percent of molybdenum carbide powder, and about 11.2 volume percent of silicon carbide powder was prepared. The mixture was formed into a preform, and infiltrated with molten silicon as described in Example 1 to form a composite. Metallographic examination of the resulting composite showed no detectable porosity remaining in the preform. A polished cross-section of the composite was heated to about 100°C above the melting point of silicon, and examined metallographically. There was no evidence of melted silicon, showing no detectable free silicon remained in the composite.

**Claims**

1. A method of forming a silicon carbide composite formed from a preform that is heated and infiltrated with molten silicon, the method comprising: forming a composite preform comprised of a carbon fiber component, a carbon particle component, a porosity component, and a reactive powder component, each component being present in an amount that provides for complete infiltration of the preform and reaction with the molten silicon so there is essentially no detectable free silicon remaining in the composite after infiltration.

2. A method according to claim 1 wherein the reactive powder component is from the group consisting of molybdenum powder, tungsten powder, molybdenum carbide powder that reacts with the molten silicon, tungsten carbide powder that reacts with the molten silicon, molybdenum silicide powder that reacts with the molten silicon, tungsten silicide powder that reacts with the molten silicon, and mixtures thereof.

3. A method according to Claim 1 or Claim 2 wherein the composite preform is further comprised of a filler component from the group consisting of molybdenum disilicide powder, silicon carbide powder, and mixtures thereof.

4. A method according to any preceding claim wherein the carbon fiber component has an aspect ratio of about 5 to 50 and a fiber diameter of about 0.5 to 25 microns.

5. A method according to any preceding claim wherein the carbon particle component has a particle size of about 0.5 to 25 microns.

6. A method according to any preceding claim wherein the reactive powder component has a particle size of about 1 to 15 microns.

7. A method according to any one of Claims 3 to 6 wherein the filler component has a particle size of about 0.5 to 25 microns.

8. A method of forming a silicon carbide composite formed from a preform that is heated and infiltrated with molten silicon, the method comprising: forming a composite preform comprised of a carbon fiber component having an aspect ratio of about 5 to 50 and a fiber diameter of about 0.5 to 25 microns, a 0.5 to 25 micron carbon particle component, a porosity component, and a 1 to 15 micron reactive powder component from the group consisting of molybdenum powder, molybdenum carbide powder that reacts with the molten silicon, molybdenum silicide powder that reacts with the molten silicon, and mixtures thereof, each component being present in an amount that provides for complete infiltration of the preform and reaction with the molten silicon so there is essentially no detectable free silicon remaining in the composite after infiltration.

9. A method according to claim 8 wherein the composite preform is further comprised of a 0.5 to 25 micron filler component from the group consisting of molybdenum disilicide powder, silicon carbide powder, and mixtures thereof.

10. A method according to Claim 8 or Claim 9 wherein the carbon fiber component has an aspect ratio of 5 to 15 and the fiber diameter is about 1 to 10 microns.

11. A method according to any one of Claims 8 to 10 wherein the carbon particle component is about 1 to 5 microns.

12. A method according to any one of Claims 8 to 11 wherein the reactive powder component is about 1 to 8 microns.

13. A method according to any one of Claims 8 to 12 wherein the composite preform is further comprised to a 1 to 15 micron filler component from the group consisting of molybdenum disilicide powder, silicon carbide powder, and mixtures thereof.